# EUROPEAN PATENT SPECIFICATION

(11) **EP 3 194 862 B1**
(45) Date of publication and mention of the grant of the patent: **19.01.2022**
(21) Application number: 15842623.9
(22) Date of filing: 14.09.2015
(51) Int. Cl.: E04B 5/48, E04C 1/39, F28D 1/02, E04B 5/02, F28F 9/26, F28F 21/00, F28D 20/00, F28F 21/06, F24D 3/14

(54) **COMPOSITE SOLAR COLLECTOR**
KOMPOSITSONNENKOLLEKTOR
COLLECTEUR SOLAIRE COMPOSITE

(30) Priority: 16.09.2014 SE 1451081; 17.10.2014 SE 1451248
(43) Date of publication of application: 26.07.2017
(73) Proprietor: Jilkén, Leif, 392 36 Kalmar (SE)
(72) Inventor: Jilkén, Leif, 392 36 Kalmar (SE)
(74) Representative: Bergenstråhle & Partners AB
(86) International application number: PCT/SE2015/050963
(87) International publication number: WO 2016/043648

(56) References cited:
- EP-A1- 0 041 724
- EP-A1- 2 578 379
- EP-A1- 2 578 379
- WO-A1-2008/153469
- WO-A2-2010/139772
- AU-A1- 2013 201 559
- DE-A1-102011 109 680
- US-A1- 2009 229 598
- US-A1- 2012 313 278
- US-A1- 2013 133 858
- US-A1- 2013 276 390
- None

## Description

### Technical field

The present invention relates generally to a composite solar collector for heating of an internal medium, preferably water.

### Background art

In prior art it is known to collect sunlight through absorption surfaces, such as solar collectors heating water, air, or any other form of medium. The medium is in general adapted to either be used, as warm water in a domestic application or as a heat transfer medium used to heat an indoor area, heated floor, or any other form of application area requiring heating. Solar collectors are further common for heating of water used for swimming pools both in public and private settings.

Solar collectors heating different sorts of mediums has been available on the market for a long time and the most common solution currently sold in the world are glazed solar collectors where the collectors utilize glass tubes to absorb heat. The market is dominated by two different techniques that both present options both for domestic and public use. Those two solutions are evacuated tube collectors and flat plate collectors, both glazed options.

In addition to the glazed solar collectors a segment of unglazed solar collectors are available as an in general cheaper alternative. Those solar collectors are almost exclusively sold on the North American, Brazilian, and Australian markets for the use of heating water in swimming pools. Due to the limited efficiency of such solutions are they overrepresented for private swimming pools installed by home owners. Even though those solar collectors are unglazed are their structural components fragile and easily broken. Those skilled in the art are aware of the vast problems with repairing and replacing such solutions.

There are multiple reasons for why the fragile solutions dominate the market of unglazed solar collectors, mostly corresponding to heat transfer rates and cost. In order for traditional unglazed solar collectors to gain a transfer rate between absorption surfaces of the solar collector and the medium inside considered sufficient those structures are normally produced with very thin material thickness. One trivial example that has been regularly available on the market is a black plastic bag that is filled with water and placed in the sun allowing the water to be heated. Those have in prior art for example been used to produce warm water for portable showers adapted for camping and boat vacations.

As described there are numerous of drawbacks with the existing technology of unglazed solar collectors, such as the fragileness, relatively bad efficiency, and an often unpleasant esthetical appearance. Similar problems of fragileness and unpleasant esthetical appearance also applies for most glazed solar collectors on the market and in addition are those solution normally more expensive resulting in a long investment term before the value created by the solar collectors corresponds to the invested value.

Furthermore, the aforementioned solutions, of both glazed and unglazed collectors, are in many cases adapted to be arranged for example on roofs or any similar structure, preferably where they are as inaccessible as possible in order to decrease the risk of damage. This is due to the fragile nature as previously described and because roofs and similar surfaces often provide a clear line between the sunrays and the solar collector for large portions of the day. Arranging solar collectors on roofs and similar areas that are in plain sight further increases the problems associated with such solutions. Architects and city planners are reluctant to install installations that are not part of the esthetical appearance of a building or construction. This causes problems with for example building permits which in many jurisdictions are required for visible solar collectors.

In prior art it is further known that heat transfer between the solar collector and the medium inside is essential for the efficacy of the solar collector. It is further known that the ambient temperature is affecting the efficiency and that the heat leakage between the ambient air and the medium shall be minimized in order to increase the efficacy. However, in general there is a relation between decreasing the leakage of heat with the transfer rate making thin structures the most suitable solution.

The person skilled in the art understands that glazed solar collectors are fragile constructions that need to be handled with care during installation and installed in a way that they are hard to access and thereby damage. However, the requirement for efficacy demands that the materials in the solar collectors are thin in order to utilize sufficient heat transfer between the absorption surface and the medium which has the effect that also the unglazed solar collectors become fragile.

Document EP 2 578 379 A1 discloses a composite solar collector according to the preamble of claim 1.

### Summary of invention

An object of the present invention is to provide a solar collector that is robust, provides good efficacy, and a good product life expectancy.

Another object of the present invention is to resolve at least some of the problems identified above while providing an environmentally friendly, cost effective, and practical solution replacing and complementing solar collectors that currently are on the market.

Thus, the invention relates to a solar collector, according to claim 1, adapted to absorb thermal heating from the sun. The solar collector comprises at least one hollow section adapted to house a medium and the solar collector is a self-supporting structure produced from a composite material constituted of at least a first and second material, wherein said first and second materials have equal or substantially equal coefficients of elasticity.

The composite solar collector is in a preferred embodiment a robust structure which in comparison to most other options on the market can withstand significant stress and forces without breaking. Composite materials are known to be used in for example building material and the strength of such materials is significantly stronger than other options that are currently available and used for solar collectors.

The at least one hollow section of the solar collector is a section within the solar collector that is hollow and adapted to house a medium. The medium can be any form of medium such as air, gas, or a liquid, preferably water. The at least one hollow section can be any form of section, including but not limiting, a hose, an extruded profile, or tubing. In a preferred embodiment is the at least one hollow section produced from extrusion and constitutes a part of the main body of the solar collector.

In prior art there has been significant problems with producing solar collectors of polymers or composite materials. Solar collectors made from polymers are thermally not as effective as glazed alternatives and the most common solution is to produce thin bag-like structures that absorb sunrays. Those structures are weak and have short life expectancy in direct sun light. Composite materials have better thermal properties and can thereby be made thicker, however attempts to for example include metal as part of the composite material in order to enhance the thermal properties has ended in solar collectors that cracks due to the degradation created by the sunlight.

When sunlight, and especially the UV-rays of the sunlight, hits a surface it affects the molecules in a way that the molecules shrink in length. This eventually causes the structure to break. Composite materials with good thermal properties have thereby not been considered beneficial for use in solar collectors. However, by utilizing a composite material with a first and second material that has a substantially equal or equal coefficient of elasticity those problems are avoided. This could in one embodiment be achieved by utilizing wooden materials and selecting polymers with a similar coefficient of elasticity for the composite material. In addition, the material is recyclable which adds to the environmentally friendly profile of such products.

Another advantage in relation to prior art solutions is that the solar collector through production of a composite material with substantially equal coefficients of elasticity can be made self-supporting meaning that the structure that is constituting the solar collector is a robust structure capable of withstanding load, carrying its own weight, and even be used as building material for building wharfs, piers, houses, roofs, etc.

In one embodiment of the composite solar collector are at least one hollow section a channel adapted for circulation of the medium, and said medium is water.

In another embodiment of the composite solar collector is the medium any mixture, containing water, for example a glycol and water mix, or any other anti-freeze medium, gas, or air.

In one preferred embodiment of the composite solar collector is the composite solar collector of a substantially elongated shape comprising a first and second absorption surface and two end pieces, wherein said first absorption surface is arranged substantially parallel to said second absorption surface.

It is further understood that the composite solar collector can have any form or shape suitable for its purpose. For example, if used as building material the solar collector could have the substantial shape of a batten or plank. In another embodiment the composite solar collector might be circular, rectangular, or any other suitable geometrical shape.

In one embodiment of the composite solar collector is the self-supporting feature utilized to create a dual-surface or two sided absorption solar collector meaning that the solar collector can absorb sunrays from two different directions. In one preferred embodiment of the invention the solar collector is thereby placed standing on its longitudinal edge in a north-south direction allowing for absorption of sunrays for most parts of the day. This can with the self-supporting solar collector be achieved without any additional supporting structure.

In the preferred embodiment wherein the solar collector is arranged on its longitudinal edge the solar collector have a reasonably equal absorption rate throughout the day. During the morning when the sun stands low in relation to the horizon the composite solar collector, has its first absorption surface directly perpendicular to the direction of the sunrays allowing a maximal absorption surface to be subjected to said sunrays. During the day the earth rotates in relation to the sun in a way that first absorption surface gradually is subjected to less sunrays. However, the sunrays also increase in intensity during this period making the absorption rate substantially equal. At noon, when the sunrays are the strongest, the sunrays falls in line with the longitudinal edge of the solar collector subjecting the solar collector to a minimum of absorption surface towards the sun. During the afternoon the sunrays instead hits the second absorption surface before disappearing at sunset.

In one embodiment of the composite solar collector is the first absorption surface arranged to absorb sunrays from a direction opposite to the second absorption surface.

The solar collector is in one embodiment shaped substantially as a cuboid or parallelepiped with two main absorption surfaces. The person skilled in the art understands that also other surfaces and edges of the solar collector indirectly work as absorption surfaces although their main purpose is the structural integrity of the solar collector and restricting the medium to the hollow sections of said solar collector.

In one embodiment of the composite solar collector are said first and second absorption surfaces adapted to absorb sunrays from different cardinal points.

In one embodiment of the composite solar collector is a reflector arranged substantially parallel to said first and second absorption surface.

Through arranging a reflector on one side of the solar collector both sides may be used for absorption simultaneously. The reflector is utilized to reflect sunrays towards the absorption surface that currently is in the shadow. The person skilled in the art understands that arranging multiple reflectors provides additional efficiency and that reflectors could be placed on both, or all, sides of the solar collector and thereby facilitating maximum absorption throughout the entire day.

Those skilled in the art further understands that reflectors may be arranged in relation to both said first and second absorption surfaces, as well as in any suitable additional angle thereto in order to increase the surface area subjected to sunrays at any or a given time.

Reflectors could in one embodiment be a mirror, in another any form of reflective material adapted to enable dual-side absorption. The dual-side absorption significantly increases the efficiency of the solar collector as well as enabling new application areas.

In one embodiment of the composite solar collector is the reflector adapted to reflect sunrays towards the absorption surface that currently is in the shadow.

The absorption surface that at any given point in time is in the shadow will be affected by the ambient temperature which normally is significantly lower than the temperature that can be achieved in direct sun light. This means that the shadow side of the solar collector will be decreasing the efficiency of the solar collector. This can be resolved by arranging one or more reflectors as previously described allowing for dual-side absorption.

In one embodiment of the composite solar collector is the composite solar collector produced with a material thickness of at least 4 mm, preferably to gain insulation from the material limiting the loss of heat into the ambient environment.

The material thickness of the prior art solutions are in general very thin making the structures weak and easy fragile. However, increasing the thickness is unbeneficial due to the thermal properties. The composite material as previously described comprises the advantage that the heat transfer rate can be maintained at a sufficient level.

Through utilizing an increased material thickness which is possible without losing efficiency with the composite material as previously described multiple benefits are achieved. For example, the increased material thickness provides additional insulation reducing the heat loss into the ambient environment. Furthermore, the material thickness decreases the risk for UV-degradation since depending on the geographical location and exposure to the sun polymer material degrades quickly. With the present solution as much as half a millimeter could be lost without affecting the overall performance of the solar collector significantly, although the insulation performance is decreased. This provides the advantage of polymer solar collectors without the disadvantages previously present in the state of the art solutions.

The person skilled in the art understands that the life expectancy of a solar collector as described herein would increase significantly over the prior art solutions. Enabling this without affecting the efficiency is enabling multiple new application areas and possibilities of increased efficiency.

In one embodiment the composite solar collector is a standalone complete system for heating of water.

In one embodiment is the composite solar collector a two sided solar collector that is a standalone complete system for heating of a medium.

Although the composite solar collector in one embodiment is adapted to be permanently arranged on for example a roof many of the components associated with prior art solutions may be removed. According to the invention is the composite solar collector a standalone complete system meaning that a sealed, with for example two caps, solar collector can be used independently of any other objects to heat for example water. This furthermore enables that the composite solar collector, according to the invention, is portable.

According to the invention the composite solar collector is used as a standalone system requiring no additional components, except for connection means sealing the medium inside of the collector or leading it to any form of application unit, such as a swimming pool. For example, if heated water is required a composite solar collector could be placed on a lawn, backyard, or any other suitable place in the sun, for an hour without any circulation. The solar collector thereby works as both a solar collector and water tank. Once the water has reached the desired temperature the collector could be picked up and carried for example inside.

In one embodiment could the standalone system be arranged fixed on for example a roof and attached to one or more hoses for water supply as well as emptying of heated water.

In one embodiment of the composite solar collector is the solar collector produced with an absorption surface reflecting a visible light wavelength interval between 400 nm and 700 nm.

In one embodiment of the composite solar collector is the solar collector is produced with absorption surface reflecting a visible light spectrum frequency interval between 430 THz and 750 THz, in some cases even 400 THz and 790 THz.

In one embodiment is the absorption surface adapted to reflect between 400 and 484 THz, (620 - 750 nm), in another 526-606 THz (495-570 nm) corresponding to red and green.

In one embodiment of the composite solar collector is the solar collector substantially red, orange, or green.

In one embodiment of the composite solar collector is the composite solar collector at least one of the following:
- produced with an absorption surface reflecting a visible light wavelength interval between 400nm and 700nm,
- produced with absorption surface reflecting a visible light spectrum frequency interval between 430 THz and 750 THz,
- produced so that said solar collector appears substantially red, orange, or green.

In one embodiment of the composite solar collector is the composite solar collector all of the following:
- produced with an absorption surface reflecting a visible light wavelength interval between 400nm and 700nm,
- produced with absorption surface reflecting a visible light spectrum frequency interval between 430 THz and 750 THz,
- produced so that said solar collector appears substantially red, orange, or green.

Solar collectors are traditionally made in dark colors, such as black or deep grey, due to that these colors have better absorption rates than lighter colors. However, an unexpected effect of the composite material as disclosed above is that the absorption rate is less affected by the color than for other solutions. This means that solar collectors could be produced in a wide range of colors without a significant loss of efficiency. This solves a problem for example in areas where the sun radiation is strong, such as Africa, where collectors with a little lower efficiency for example could provide water with more usable temperatures. Additionally, the market penetration for solar collectors is widely dependent on the possibility to receive building permits. Town architects are often negative to the esthetical element presented by solar collectors; this is resolved with a solution wherein the solar collector can be produced to resemble for example a metal or tile roof.

In one embodiment is the composite solar collector of a size that a user can carry around, preferably as a mobile solar collector.

In another embodiment is the composite solar collector arranged with wheels, in another is it arranged with any other device that facilitates mobility and thereby makes it easier to transport by a user between an absorption spot and where the heated medium is needed.

For some application areas it is beneficial that the solar collector is mobile or moveable. This could for example be for camping or for utilization in development countries.

In one embodiment of the composite solar collector are said different materials at least one polymer and one organic fiber material, preferably selected from a cellulous based material and a wooden material.

The wooden material can in one embodiment be scobs or sawdust. According to the invention is the wooden material formed as whirls or bogie springs, preferably as wooden parings, shavings, or curling chips.

In one preferred embodiment is the composite solar collector produced by extrusion or injection molding. However, the person skilled in the art understands that any suitable production method could be utilized.

In one embodiment is the composite solar collector adapted to house at least 40 liters of medium per square meter of absorption surface.

In a further embodiment is the composite solar collector adapted to house no more than 50 liters of medium per square meter of absorption surface.

The relation between the amount of medium within the solar collector and the absorption surface is important in order to get a good efficiency while avoiding overheating of the system. The amount of medium is further relevant in order to produce the desired temperatures of medium.

In one embodiment is the hollow section of said composite solar collector comprising irregularities, preferably bumps or craters, on the inner surface, preferably to enable whirling of the medium.

The irregularities are unexpectedly created when using the composite material due to moisture that is attracted by for example wood fibers. If solely polymers would be used both the inside and outside of the profile would be flat surfaces.

In one embodiment is the composite solar collector adapted to withstand a medium subjected to high pressure.

For some application areas it is beneficial to put a medium under high pressure into the solar collectors, this is something that couldn't be done with the majority of existing solutions on the market. Furthermore, there the self-supporting structure of the composite solar collector minimizes the expansion of the solar collector when a medium expands. This has the effect that when heating for example water a pressure is built within the solar collector that can be utilized upon usage of the medium inside.

In one embodiment is the composite solar collector adapted to be used as building material preferably as building material for a wharf, pier, wall, fence, roof, or any other form of construction.

The structural integrity of the material used for the solar collectors enables new application areas where for examples walls, fences, or roofs could be built from the solar collectors. Additionally, the esthetical appearance of such collectors would resolve many regulatory issues relating to building permits etc.

In one embodiment of the invention, the solar collector composite material consisting of two different materials, the first material being a polymer and the second material being wood fiber parings, wood fiber curling chips, wood fiber shavings, or similar wood fibers that has a whirl or bogie spring shape.

According to the invention of the composite solar collector does one of the different materials in said composite solar collector have a whirl or bogie spring shape.

Those skilled in the art understands that preferably are the wooden material formed as a whirl or bogie spring, however other materials are suitable for composite materials as well and can be used for the solar collector within the scope of the invention.

In one embodiment does the hollow section of said composite solar collector comprise irregularities on an inner surface arranged in contact with said medium, preferably bumps or craters to enable whirling of the medium.

The solar collectors are in one preferred embodiment produced through extrusion which with beneficially can be used to create said bumps and/or craters that helps the medium within the solar collector to be evenly distributed and heated.

According to an aspect, a solar collector arrangement comprises at least one solar collector, wherein said solar collector is a composite solar collector.

In one embodiment is said composite solar collector a solar collector according to any of the herein described embodiments. The solar collector arrangement is an arrangement wherein the composite solar collector as disclosed herein is arranged during operation.

According to one embodiment of the composite solar collector is the composite solar collector of a substantially elongated shape and comprises a first and second absorption surface. The absorption surfaces are arranged on the outside of said composite solar collector and said first absorption surface is arranged substantially parallel to said second absorption surface. The composite solar collector is a two sided solar collector meaning that the composite solar collector can absorb sunrays from at least two directions on two different surfaces.

The composite solar collector further comprises two end pieces as well as two elongated side pieces connecting said first and second absorption surfaces together creating a composite solar collector preferably in the shape of a rectangle or cuboid. Those skilled in the art understands that the composite solar collector as described herein have multiple surfaces and that all surfaces indirectly has the ability to absorb sunrays, however said two absorption surfaces are adapted for sun absorption and substantially the largest surfaces of the composite solar collector.

In one embodiment of the composite solar collector is said first absorption surface arranged to absorb sunrays from a direction opposite to the second absorption surface, preferably from a direction of a different cardinal point.

In one embodiment the solar collector arrangement further comprises at least one reflector that is arranged substantially parallel to said first and second absorption surface, preferably wherein said reflector is adapted to reflect sunrays towards the absorption surface that currently is in the shadow.

In another embodiment, the solar collector arrangement further comprises at least one solar cell, wherein
- the solar collector has at least one absorption surface adapted to absorb sunrays, and
- the at least one solar cell is arranged on the at least one absorption surface.

Another beneficial and unexpected effect of the composite solar collector is that due to its self-supporting feature it is possible to arrange other items on the solar collector absorption surfaces, and other surfaces of the composite solar collector. Another advantage is that the composite solar collector is affected not only of direct sunrays but also of ambient temperature meaning that the solar collector works well if the ambient temperature is high enough even if no direct sunrays currently are present on the absorption surfaces. Thereby can the composite solar collector as described herein in another embodiment be used as a combined cooling device and solar collector for solar cells. As appreciated by the person skilled in the art, solar cells are adapted to harvest electrical energy from the sun while solar collectors are adapted to harvest thermal energy. This embodiment is further described in the detailed description below.

In one embodiment does the solar collector arrangement comprise at least one composite solar collector and more than one reflector arranged moveably, wherein said reflectors are adapted to be controlled to reflect sunrays towards at least one of a first and second absorption surface.

In one embodiment of the solar collector arrangement is the more than one reflector arranged to follow the suns cardinal point during the day.

In one embodiment of the solar collector arrangement is the more than one reflector arranged to be individually moved into reflecting sunrays towards at least one of said first and second absorption surfaces.

It is an advantaged with the composite solar collector arrangement that through moving one or more reflectors can the surface temperature of an absorption surface be controlled.

It is understood that any of the aforementioned embodiments could be combined in any suitable way within the scope of the invention as claimed in the appended claims.

### Brief description of drawings

The invention is now described, by way of example, with reference to the accompanying drawings, in which:
Fig. 1 illustrates a principal sketch of one embodiment of the composite solar collector, wherein the composite material is illustrated.
Fig. 2 illustrates an embodiment of the composite solar collector.
Fig. 3 illustrates a view of an embodiment of the composite solar collector wherein the absorption surfaces have been removed showing the hollow sections.
Fig. 4 illustrates another embodiment of the composite solar collector wherein the absorption surfaces have been removed showing the hollow sections.
Fig. 5 illustrates an embodiment of the composite solar collector arrangement wherein a solar collector and a reflector has been arranged to improve dual surface absorption.
Fig. 6 illustrates an embodiment of the composite solar collector arrangement wherein the second absorption surface of a solar collector is visible.
Fig. 7 illustrates an embodiment of the composite solar collector within a composite solar collector arrangement.
Fig. 8 illustrates a second embodiment of the composite solar collector wherein an inlet and outlet is arranged on the same end piece.
Fig. 9 illustrates an embodiment of the composite solar collector within a solar collector arrangement wherein the solar collector is arranged within a system of a typical example application area.
Fig. 10 illustrates an embodiment of the composite material consisting of at least two materials, wherein one of the materials has a material structure shape of a whirl or bogie spring shape.
Fig. 11 illustrates an embodiment wherein multiple movable reflectors are arranged in a solar collector arrangement and directed towards a composite solar collector.
Fig. 12 illustrates another embodiment wherein multiple movable reflectors are arranged in a solar collector arrangement and directed away from a composite solar collector.
Fig. 13 illustrates an embodiment of a solar collector arrangement wherein at least one solar cell is arranged on a composite solar collector.

### Description of embodiments

In the following, a detailed description of composite solar collector is provided in light of the appended drawings.

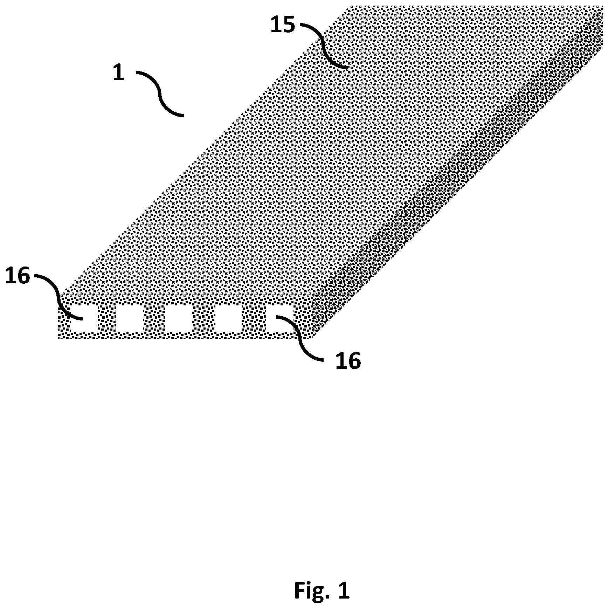

Figure 1 illustrates a principal sketch of the solar collector 1 wherein the composite material 15 is illustrated. As shown the composite material is a mixture of at least two components, or as previously mentioned materials that constitutes the production material for the solar collector. In a preferred embodiment these materials are at least one polymer with equal coefficient of elasticity with wooden scobs. However, the person skilled in the art understands that any materials with equal or substantially equal coefficient of elasticity could be used by the person skilled in the art producing the solar collector as herein disclosed. Figure 1 further illustrates the hollow sections 16, or channels 16, that the medium is stored, circulated, or transported within.

Figure 1 further illustrates an example of how the collector body in one embodiment could look during production, for example the collector body could be extruded in long continuous sections.

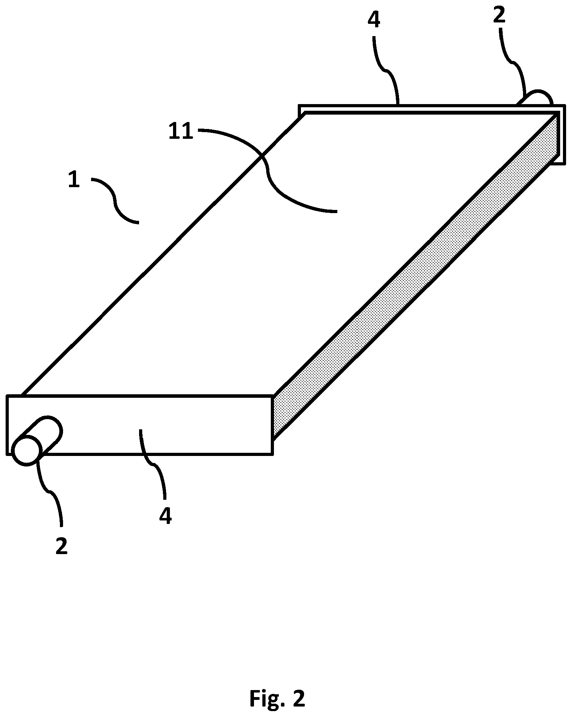

Figure 2 illustrates the composite solar collector in a preferred embodiment wherein the solar collector 1 comprises a first absorption surface 11, an inlet and outlet 2, as well as two end pieces 4. The person skilled in the art understands that the solar collector 1 further comprises the second end piece 4, as well as a second absorption surface hided or partly hidden from view in figure 2. Figure 2 further illustrates the elongated shape of the solar collector 1 which is a preferred embodiment. However, those skilled in the art understand that the solar collector 1 can have different shapes or forms within the scope of the claimed invention.

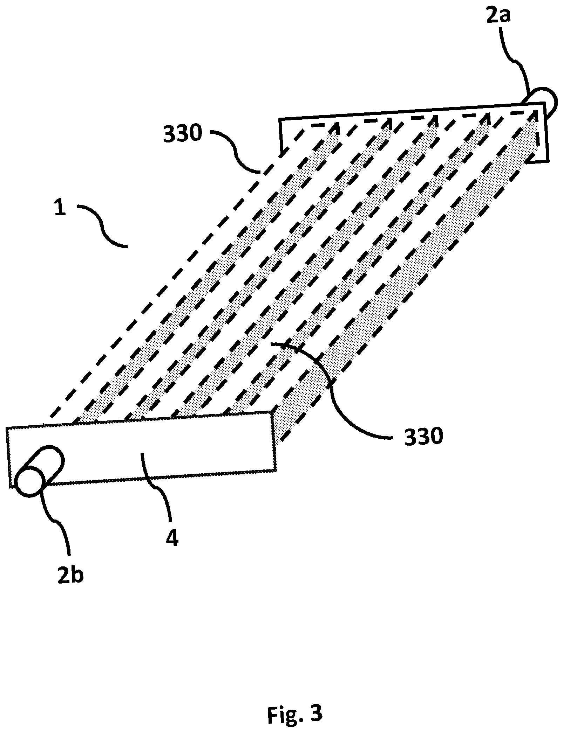

Figure 3 illustrates an embodiment of the solar collector wherein the absorption surfaces are transparent or removed in a way that the hollow sections 330 inside are shown. The embodiment as illustrated in figure 3 is in general an example embodiment only for illustration purposes, however, in one embodiment could the solar collector be produced with multiple absorption surfaces arranged on each hollow section 330 as illustrated in figure 3.

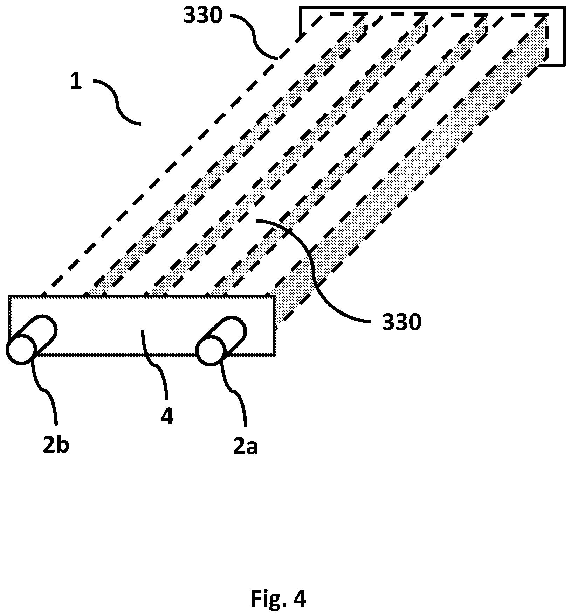

Figure 4 illustrates another embodiment similar to the embodiment as illustrated in figure 3 however, with the input 2a and output 2b arranged on the same end piece 4. Those skilled in the art understands that the number of hollow sections 330 as illustrated in figure 3 and figure 4 can be any number of hollow sections 330 depending on the size and preferred application area for each solar collector. The composite solar collector as described herein is not limited to any specific number of hollow sections 330. In another embodiment could the composite solar collector 1 have only one hollow section 330.

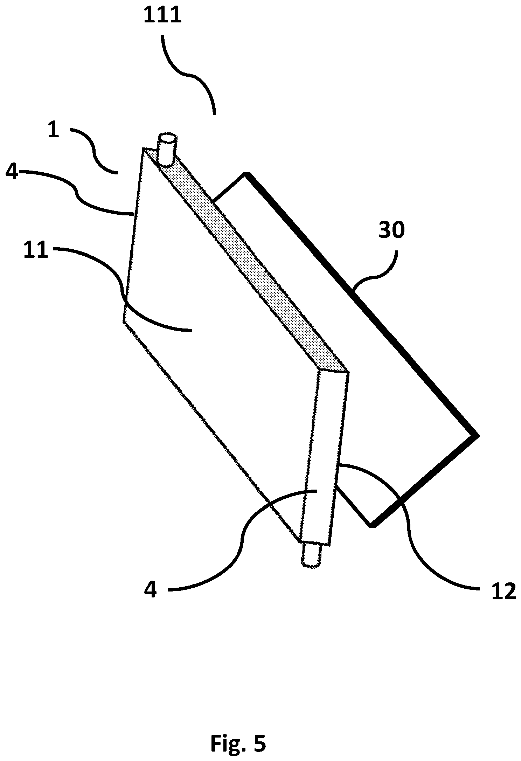

Figure 5 illustrates one embodiment of the solar collector 1 wherein a reflector 30 has been arranged on one side of the solar collector 1. The reflector 30 can be any form of reflector, by way of example but not limited to, a mirror, a reflective object, a sheet of glass, or any other suitable reflective arrangement. The reflector 30 is arranged to reflect sunrays towards the second absorption surface while the direct sunrays hits the first absorption surface 1.

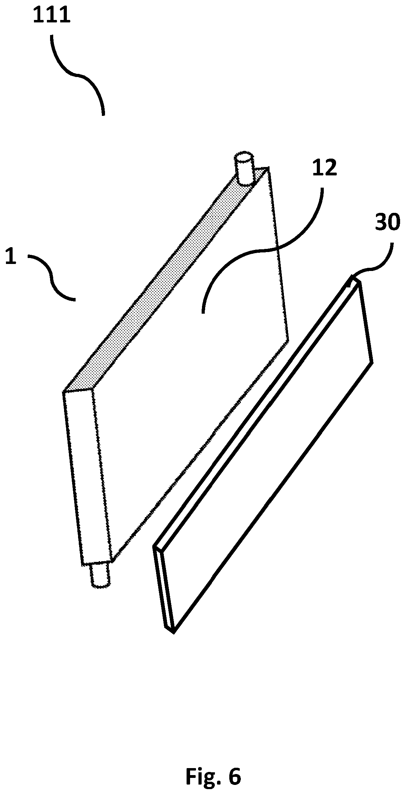

Figure 6 illustrates a second view of the embodiment as illustrated in figure 3 wherein the reflector 30 is arranged to reflect sunrays towards the second absorption surface 12 of the solar collector 1.

In addition to using the same coefficient of elasticity the composite material is made stronger through utilization of parings, curling chips, shavings, or similar that has a whirl or bogie spring shape creating extra flexibility in the fibers. This further reduces the risk for crack building in the solar collector.

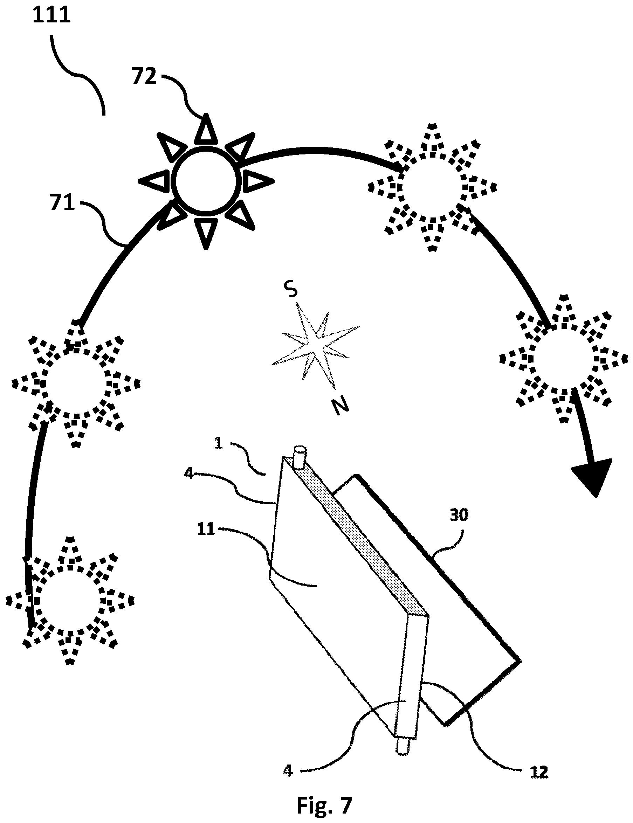

Figure 7 illustrates one embodiment of the composite solar collector 1 in a composite solar collector arrangement 111 wherein a reflector 30, such as a mirror or any other reflective object, is arranged on one side of said solar collector and adapted to reflect sunrays towards an absorption surface 11, 12, especially an absorption surface 12 (see figure 6) that for the time being is located in the shadow. The person skilled in the art understands that the absorption surface 11, 12 that is located in the shadow may be different absorption surfaces 11, 12 during different times of the day which is further illustrated in figure 7. The path of the sun 71 shows different positions of the sun 72 during different times of the day and further illustrates what cardinal points the composite solar collector 1 in one embodiment is located in.

The person skilled in the art understands that in one preferred embodiment as illustrated in figure 7 is the solar collector 1 of the solar collector arrangement arranged in a north-south direction creating the most equal power outtake during the day. Those skilled in the art further understands that a second reflective object 30 preferably may be arranged on the opposite side of the solar collector 1 in relation to the first reflector 30 as illustrated in figure 7 in order to reflect sunrays in the afternoon.

When the sun rises the sunrays are not as intense as they are during the middle of the day and thereby the direction of the solar collector as illustrated in figure 7 provides benefits unheard of for regular solar collectors. The solar collector has an absorption surface 11 directed towards the sunrays during the morning, simultaneously are also sunrays reflected in the reflector 30 in a way that the second absorption surface 12 also is heated. At noon when the sun is the most intense only an end piece 4 is in a perpendicular direction to the sunrays while the first 11 and second 12 absorption surface are arranged in a longitudinal direction creating less absorption surface area directed towards the sun. However, due to the increased intensity of the sun during the middle of the day it is still in one embodiment possible to have a similar efficiency during those hours. Those skilled in the art understands that the end piece 4 thereby can work as an indirect absorption surface as well as the longitudinal side connecting said first 11 and second 12 absorption surfaces.

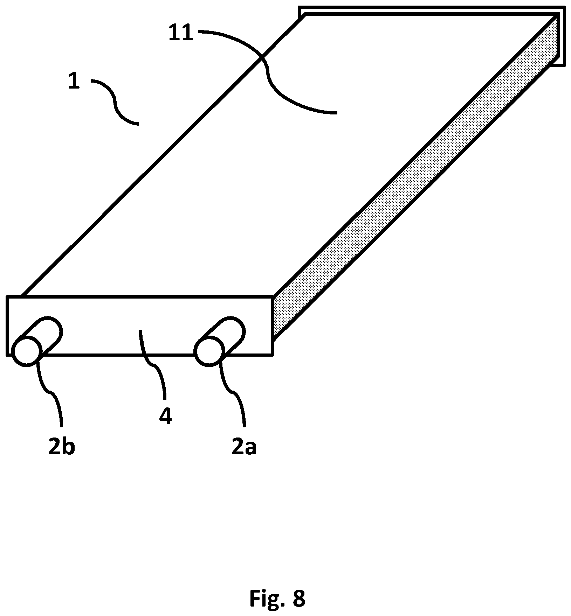

Figure 8 illustrates an embodiment corresponding to the embodiment as illustrated in figure 4 wherein the input 2a and output 2b are arranged on the same end piece 4. The input 2a and output 2b are in one embodiment interchangeable and the medium can be circulated in any preferred direction. In one embodiment could the circulation be conducted in both directions depending on which side the heated medium was extracted last time.

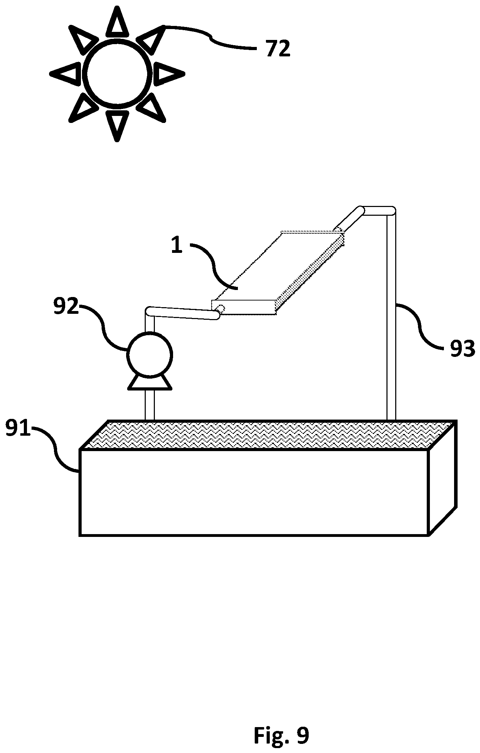

Figure 9 illustrates an embodiment of the solar collector 1 wherein the solar collector is arranged in a typical application area heating the water of a swimming pool 91. The water is in one embodiment as illustrated in figure 9 circulated by a circulation pump 92 between said solar collector 1 and the swimming pool 91 through connection means 93, such as pipes, tubes, or hoses. In another embodiment circulation occurs naturally due to the heat changes within the system comprising the solar collector 1 and the swimming pool 91. The swimming pool 91 is an illustration example and any form of water tank, shower, or other application can be used within the embodiment as illustrated by figure 9.

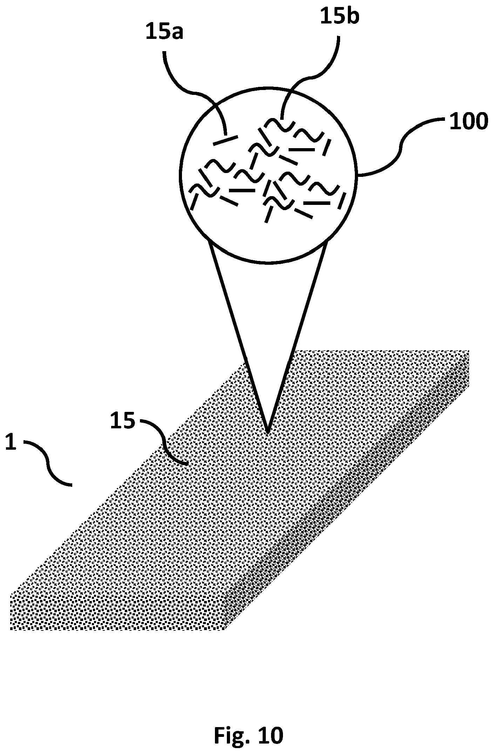

Figure 10 illustrates one embodiment of the composite material 15 of the solar collector 1 wherein an illustrative magnification 100 illustrates the composite material 15 in further detail. The embodiment as illustrated in figure 10 is an embodiment according to the invention of the composite material 15 wherein two different materials 15a, 15b, are used. The first material 15a being a polymer and the second material 15b being wood fiber parings, wood fiber curling chips, wood fiber shavings, or similar wood fibers that has a whirl or bogie spring shape. The wood fiber that has a whirl or bogie spring shape creates elasticity in the material which is a significant improvement over solutions where straight wood fibers are used. The usage of whirl or bogie spring shaped fibers are a limiting embodiment for the solar collector. For examples where straight fibers, such as sawdust or scobs, are used for composite materials the composite material becomes robust but fragile and with a low amount of elasticity. This creates problems when loads are applied to the solar collector and the risk for cracks in the material increases.

According to one embodiment of the composite solar collector and composite solar collector arrangement can any form of wooden material be used as the second material 15b without limitations to certain wood types. The key is that wooden fibers differ from other fibers, such as carbon fiber or glass fiber by means of their fundamental design. Natural fibers are adapted to transport water in for example a tree and have thereby developed a structure that consists of fibers that are curved, twisted, or whirl formed. However, other fibers, such as glass fiber and carbon fiber, are straight and thereby less flexible. The first material 15a could be any form of polymer, preferably polyethylene or polypropylene depending on the geographical place wherein the solar collector is applied. Polyethylene handles degrees below zero better than polypropylene and is thereby better suited for some geographical regions. In another embodiment can hemp from old bags or similar be used as the second material 15. This creates additional dimensions to the sustainability of the solar collectors. The solar collectors are in addition to being fully recyclable possible to produce from material recycled from other products.

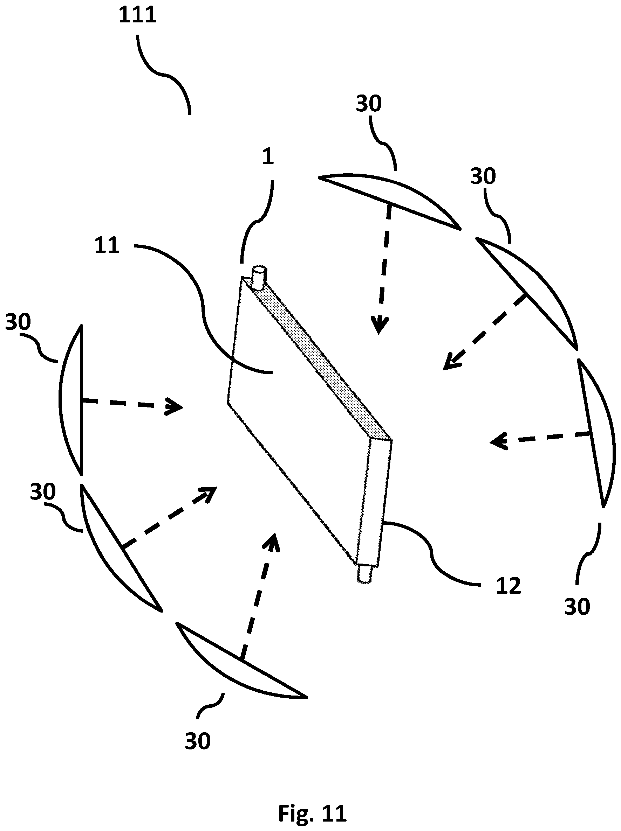

Figure 11 illustrates an embodiment of the solar collector arrangement 111 wherein multiple reflectors 30 are arranged around a solar collector 1. The multiple reflectors 30 are arranged to reflect sunrays towards the first 11 and second 12 surface of the solar collector 1. The reflectors may be of any form or shape and can for example be flat mirrors or parabolic reflectors, however those skilled in the art understands that many differ forms, types, and shapes of reflector might be used.

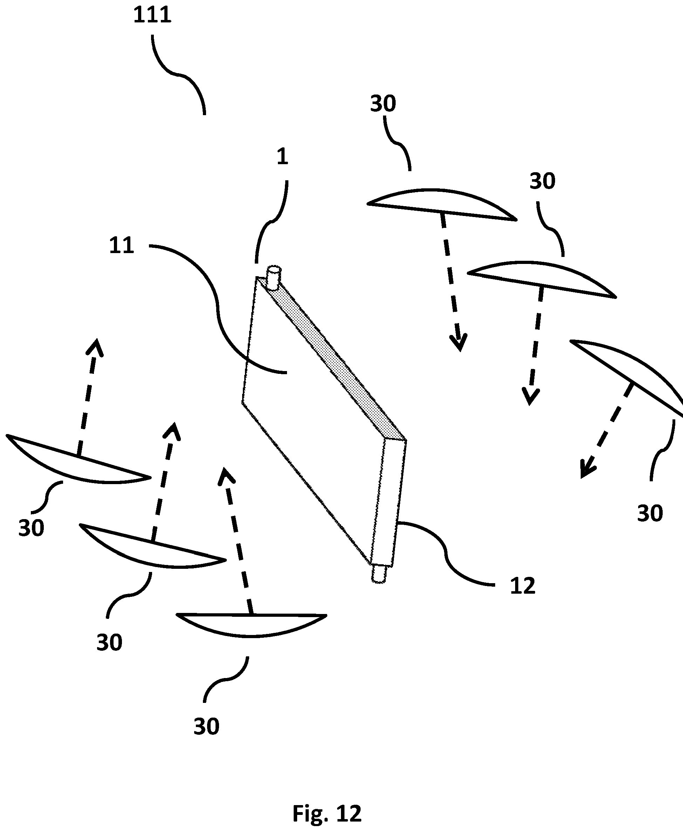

Figure 12 illustrates another embodiment of the solar collector arrangement 111 wherein the reflectors 30 as illustrated in figure 11 are movably arranged in a way that sunrays may be directed either towards said first 11 and second 12 absorption surfaces (as illustrated in figure 11) or a way from the first 11 and second 12 absorption surfaces (as illustrated in figure 12). Depending on the intensity of the sun one or more reflector 30 can be directed towards or away from the first 11 and/or the second 12 absorption surface creating an arrangement 111 wherein the surface temperatures can be controlled.

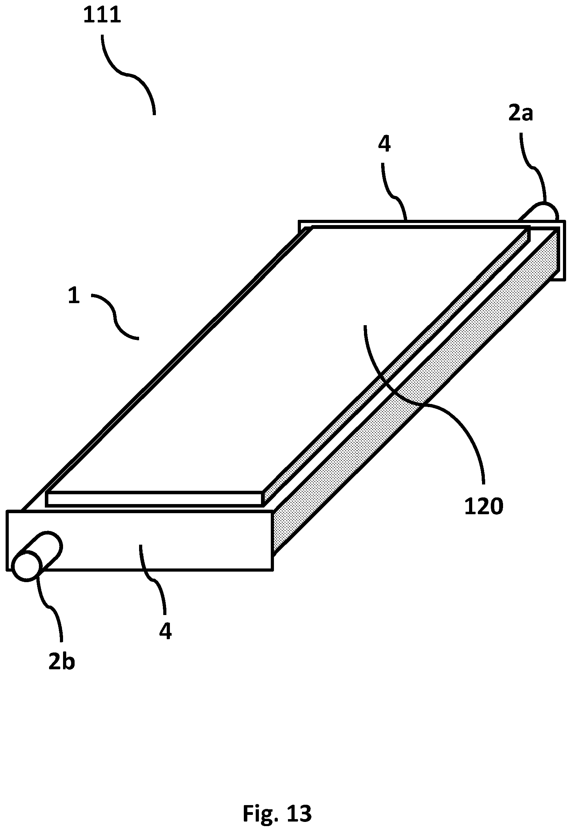

Figure 13 illustrates an embodiment of the solar collector arrangement 111 wherein solar cells 120 are arranged on one or more absorption surfaces of the solar collector 1.

The solar collector 1 is adapted to absorb thermal energy from the sun and transfer that heat to a medium inside the solar collector 1, such as water. The heat is in general absorbed from sunrays subjected to the absorption surfaces 11, 12 of the solar collector 1. However, the medium within the solar collector 1 can be heated even without direct sunrays if the ambient temperature is warmer than the medium within the solar collector 1. This together with the heat transfer rate enables that the composite solar collector 1 in a further embodiment may be used to cool other devices. In a preferred embodiment wherein the composite solar collector 1 is used as a cooling element are solar cells arranged on one or more of the absorption surfaces 12, 13. The solar cells produce electricity and are in general designed to absorb as much of the energy from the sun as possible. This creates a problem due to the vast amount of excessive heat that is absorbed around solar cells generating electricity, furthermore this excessive heat even decreases the efficiency rate of the solar cells. By arranging solar cells on the self-supporting composite solar collectors 1 are thereby an arrangement 111 created wherein both warm water and electricity is created from an arrangement with better efficiency than prior art solutions. It is without problem possible to reach heats of 50 degrees Celsius for the warm water produced in such an arrangement 111.

In one embodiment of the solar collector arrangement 111 comprising at least one composite solar collector 1 with solar cells 120 arranged on an absorption surface 11, 12 around 17% of the energy that is exerted upon the solar cells are converted to electric energy, the remaining portion is excessive heat energy which can be used for production of warm water through the composite solar collector 1. This can't be done with for example flat plate solar collectors or evacuated tube solar collectors since they require direct sun light in order to achieve a good efficiency.

## Claims

1. A composite solar collector (1) adapted to absorb thermal heating from the sun, wherein said solar collector (1) comprises at least one hollow section (16) adapted to house a medium, wherein the solar collector (1) is a standalone mobile solar collector system for heating the medium, comprising a self-supporting structure produced from a composite material (15) constituted by a mixture of at least a first (15a) and second (15b) material, wherein said first (15a) and second (15b) materials are different materials, **characterized in that** said first (15a) and second (15b) materials have equal or substantially equal coefficients of elasticity and wherein one of said first (15a) and second (15b) materials in said composite solar collector has a whirl or bogie spring shape.

2. The composite solar collector (1) according to claim 1, wherein the at least one hollow section (16) is at least one channel adapted for circulation of the medium, and said medium is water.

3. The composite solar collector (1) according to any one of claims 1 or 2, wherein said composite solar collector is produced with a material thickness of at least 4 mm.

4. The composite solar collector (1) according to any one of claims 1-3, wherein said composite solar collector (1) is a two-sided solar collector.

5. The composite solar collector (1) according to any one of claims 1-4, wherein said first material (15a) is a polymer and said second material (15b) is an organic fiber material, preferably wherein the latter is selected from a cellulous based material and a wooden material.

6. The composite solar collector (1) according to any one of claims 1-5, wherein the hollow section (16) of said composite solar collector (1) comprises irregularities on an inner surface arranged in contact with said medium, preferably bumps or craters to enable whirling of the medium.

7. The composite solar collector (1) according to any one of claims 1-6, wherein said composite solar collector (1) is adapted to be used as building material, preferably as building material for a wharf, pier, wall, fence, roof, or any other form of construction.

8. The composite solar collector (1) according to any one of claims 1-7, wherein said composite solar collector (1) comprises at least one of the following:
- an absorption surface reflecting a visible light wavelength interval between 400nm and 700nm,
- an absorption surface (11) reflecting a visible light spectrum frequency interval between 430 THz and 750 THz,
- said composite solar collector is substantially red, orange, or green.

9. A composite solar collector arrangement (111) comprising a composite solar
collector (1) according to any one of claims 1-8, wherein the solar collector arrangement (111) is of an elongated shape, comprising a first (11) and second (12) absorption surface on the outside of said composite solar collector (1), said first absorption surface (11) is substantially parallel to said second (12) absorption surface and the composite solar collector (1) is a two-sided solar collector (1).

10. The composite solar collector arrangement (111) according to claim 9, wherein the composite solar collector is adapted to be arranged on its longitudinal edge enabling said first absorption surface (11) to absorb sunrays from a direction opposite to the second absorption surface (12), preferably from a direction of a different cardinal point.

11. The composite solar collector arrangement (111) according to any one of claims 9 or 10, wherein the solar collector arrangement (111) further comprises at least one mirror that is arranged substantially parallel to said first (11) and second (12) absorption surface, preferably wherein said mirror is adapted to reflect sunrays towards the absorption surface (11;12) that currently is in the shadow.

12. The composite solar collector arrangement (111) according to claim 11, wherein the at least one mirror is more than one mirror and wherein the more than one mirror are arranged movably and said mirrors are adapted to be controlled to reflect sunrays towards at least one of the first (11) and second absorption surface (12).

13. The composite solar collector arrangement (111) according to any one of claims 9-11, wherein the solar collector arrangement (111) further comprises a solar cell arranged on one of the absorption surfaces (11, 12).

## Patentansprüche

1. Kompositsonnenkollektor (1), der vorgesehen ist, um thermische Erwärmung von der Sonne zu absorbieren, wobei der Sonnenkollektor (1) mindestens ein hohles Segment (16) umfasst, das vorgesehen ist, um ein Medium aufzunehmen, wobei der Sonnenkollektor (1) ein eigenständiges mobiles Sonnenkollektorsystem zum Erwärmen des Mediums ist, umfassend eine selbsttragende Struktur, die aus einem Verbundmaterial (15) produziert worden ist, das durch eine Mischung aus mindestens einem ersten (15a) und einem zweiten (15b) Material gebildet ist, wobei das erste (15a) und das zweite (15b) Material unterschiedliche Materialien sind, **dadurch gekennzeichnet, dass** das erste (15a) und das zweite (15b) Material gleiche oder im Wesentlichen gleiche Elastizitätskoeffizienten haben, und wobei eines von dem ersten (15a) und dem zweiten (15b) Material in dem Kompositsonnenkollektor eine Wirbel- oder Rückstellfederform aufweist.

2. Kompositsonnenkollektor (1) nach Anspruch 1, wobei das mindestens eine hohle Segment (16) mindestens ein Kanal ist, der zur Zirkulation des Mediums vorgesehen ist, und wobei das Medium Wasser ist.

3. Kompositsonnenkollektor (1) nach einem der Ansprüche 1 oder 2, wobei der Kompositsonnenkollektor mit einer Materialdicke von mindestens 4 mm produziert wird.

4. Kompositsonnenkollektor (1) nach einem der Ansprüche 1 bis 3, wobei der Kompositsonnenkollektor (1) ein zweiseitiger Sonnenkollektor ist.

5. Kompositsonnenkollektor (1) nach einem der Ansprüche 1 bis 4, wobei das erste Material (15a) ein Polymer ist und das zweite Material (15b) ein organisches Fasermaterial ist, wobei vorzugsweise das letztere ausgewählt ist aus einem Material auf Cellulosebasis und einem Holzmaterial.

6. Kompositsonnenkollektor (1) nach einem der Ansprüche 1 bis 5, wobei das hohle Segment (16) des Kompositsonnenkollektors (1) Unregelmäßigkeiten auf einer Innenoberfläche umfasst, die in Kontakt mit dem Medium angeordnet ist, vorzugsweise Höcker oder Trichter, um Verwirbeln des Mediums zu ermöglichen.

7. Kompositsonnenkollektor (1) nach einem der Ansprüche 1 bis 6, wobei der Kompositsonnenkollektor (1) vorgesehen ist, um als Baumaterial verwendet zu werden, vorzugsweise als Baumaterialien für einen Kai, eine Pier, eine Wand, einen Zaun, ein Dach oder beliebige sonstige Bauform.

8. Kompositsonnenkollektor (1) nach einem der Ansprüche 1 bis 7, wobei der Kompositsonnenkollektor (1) mindestens eines der folgenden umfasst:
- eine Absorptionsoberfläche, die ein sichtbares Lichtwellenlängenintervall zwischen 400 nm und 700 nm reflektiert,
- eine Absorptionsoberfläche (11), die ein sichtbares Lichtspektrumfrequenzintervall zwischen 430 THz und 750 THz reflektiert,
- wobei der Kompositsonnenkollektor im Wesentlichen rot, orange oder grün ist.

9. Kompositsonnenkollektoranordnung (111), umfassend einen Kompositsonnenkollektor (1) nach einem der Ansprüche 1 bis 8, wobei die Sonnenkollektoranordnung (111) eine längliche Form hat, umfassend eine erste (11) und eine zweite (12) Absorptionsoberfläche auf der Außenseite des Kompositsonnenkollektors (1), wobei die erste Absorptionsoberfläche (11) im Wesentlichen parallel zu der zweiten (12) Absorptionsoberfläche ist und der Kompositsonnenkollektor (1) ein zweiseitiger Sonnenkollektor (1) ist.

10. Kompositsonnenkollektoranordnung (111) nach Anspruch 9, wobei der Kompositsonnenkollektor vorgesehen ist, um auf seinem Längsrand angeordnet zu werden, wodurch ermöglicht wird, dass die erste Absorptionsoberfläche (11) Sonnenstrahlen aus einer Richtung absorbiert, die der zweiten Absorptionsoberfläche (12) gegenüber liegt, vorzugsweise aus einer Richtung eines anderen Kardinalpunkts.

11. Kompositsonnenkollektoranordnung (111) nach einem der Ansprüche 9 oder 10, wobei die Sonnenkollektoranordnung (111) des Weiteren mindestens einen Spiegel umfasst, der im Wesentlichen parallel zu der ersten (11) und der zweiten (12) Absorptionsoberfläche angeordnet ist, wobei der Spiegel vorzugsweise vorgesehen ist, um Sonnenstrahlen in Richtung der Absorptionsoberfläche (11; 12) zu reflektieren, die momentan im Schatten liegt.

12. Kompositsonnenkollektoranordnung (111) nach Anspruch 11, wobei der mindestens eine Spiegel mehr als ein Spiegel ist, und wobei der mehr als eine Spiegel beweglich angeordnet ist und die Spiegel vorgesehen sind, um gesteuert zu werden, um Sonnenstrahlen in Richtung von mindestens einer von der ersten (11) und der zweiten Absorptionsoberfläche (12) zu reflektieren.

13. Kompositsonnenkollektoranordnung (111) nach einem der Ansprüche 9 bis 11, wobei die Sonnenkollektoranordnung (111) des Weiteren eine Solarzelle umfasst, die auf einer der Absorptionsoberflächen (11, 12) angeordnet ist.

## Revendications

1. Collecteur solaire composite (1) adapté pour absorber un chauffage thermique provenant du soleil, ledit collecteur solaire (1) comprenant au moins une section creuse (16) adaptée pour accueillir un milieu, le collecteur solaire (1) étant un système de collecteur solaire mobile autonome destiné à chauffer le milieu, comprenant une structure autoportante produite à partir d'un matériau composite (15) constitué d'un mélange d'au moins un premier (15a) et un deuxième (15b) matériau, lesdits premier (15a) et deuxième (15b) matériaux étant des matériaux différents,
**caractérisé en ce que** lesdits premier (15a) et deuxième (15b) matériaux ont des coefficients d'élasticité égaux ou sensiblement égaux, et dans lequel un desdits premier (15a) et deuxième (15b) matériaux dans ledit collecteur solaire composite a une forme de tourbillon ou de ressort de bogie.

2. Collecteur solaire composite (1) selon la revendication 1, dans lequel l'au moins une section creuse (16) est au moins un canal adapté pour la circulation du milieu, et ledit milieu est l'eau.

3. Collecteur solaire composite (1) selon l'une quelconque des revendications 1 et 2, ledit collecteur solaire composite étant produit avec une épaisseur de matériau d'au moins 4 mm.

4. Collecteur solaire composite (1) selon l'une quelconque des revendications 1 à 3, ledit collecteur solaire composite (1) étant un collecteur solaire biface.

5. Collecteur solaire composite (1) selon l'une quelconque des revendications 1 à 4, dans lequel ledit premier matériau (15a) est un polymère et ledit deuxième matériau (15b) est un matériau organique fibreux, de préférence dans lequel ce dernier est choisi parmi un matériau à base de cellulose et un matériau en bois.

6. Collecteur solaire composite (1) selon l'une quelconque des revendications 1 à 5, la section creuse (16) dudit collecteur solaire composite (1) comprenant des irrégularités sur une surface interne disposée en contact avec ledit milieu, de préférence des bosses ou des cratères pour permettre le tourbillonnement du milieu.

7. Collecteur solaire composite (1) selon l'une quelconque des revendications 1 à 6, ledit collecteur solaire composite (1) étant adapté pour être utilisé comme matériau de construction, de préférence comme matériau de construction pour un quai, une jetée, un mur, une barrière, un toit, ou toute autre forme de construction.

8. Collecteur solaire composite (1) selon l'une quelconque des revendications 1 à 7, ledit collecteur solaire composite (1) comprenant au moins un des éléments suivants :
- une surface d'absorption réfléchissant un intervalle de longueurs d'onde de lumière visible entre 400 nm et 700 nm,
- une surface d'absorption (11) réfléchissant un intervalle de fréquences du spectre de lumière visible entre 430 THz et 750 THz,
- ledit collecteur solaire composite est sensiblement rouge, orange, ou vert.

9. Agencement de collecteur solaire composite (111) comprenant un collecteur solaire composite (1) selon l'une quelconque des revendications 1 à 8, l'agencement de collecteur solaire (111) étant de forme allongée, comprenant une première (11) et une deuxième (12) surface d'absorption sur l'extérieur dudit collecteur solaire composite (1), ladite première surface d'absorption (11) étant sensiblement parallèle à ladite deuxième surface d'absorption (12) et le collecteur solaire composite (1) étant un collecteur solaire biface (1).

10. Agencement de collecteur solaire composite (111) selon la revendication 9, dans lequel le collecteur solaire composite est adapté pour être disposé sur son bord longitudinal, permettant à ladite première surface d'absorption (11) d'absorber les rayons du soleil provenant d'une direction à l'opposé de la deuxième surface d'absorption (12), de préférence d'une direction d'un point cardinal différent.

11. Agencement de collecteur solaire composite (111) selon l'une quelconque des revendications 9 et 10, l'agencement de collecteur solaire (111) comprenant en outre au moins un miroir qui est disposé de façon sensiblement parallèle auxdites première (11) et deuxième (12) surfaces d'absorption, de préférence dans lequel ledit miroir est adapté pour réfléchir les rayons du soleil vers la surface d'absorption (11 ; 12) qui à ce moment est dans l'ombre.

12. Agencement de collecteur solaire composite (111) selon la revendication 11, dans lequel l'au moins un miroir consiste en plusieurs miroirs et dans lequel les miroirs sont disposés de façon mobile et lesdits miroirs sont adaptés pour être commandés pour réfléchir les rayons du soleil vers au moins une des première (11) et deuxième (12) surfaces d'absorption.

13. Agencement de collecteur solaire composite (111) selon l'une quelconque des revendications 9 à 11, l'agencement de collecteur solaire (111) comprenant en outre une cellule solaire disposée sur une des surfaces d'absorption (11, 12).
